# EUROPEAN PATENT APPLICATION

(11) **EP 2 963 002 A1**
(43) Date of publication of application: **06.01.2016**
(21) Application number: 14757217.6
(22) Date of filing: 27.02.2014
(51) Int. Cl.: C04B 37/00

(54) **CERAMIC BONDED BODY AND CHANNEL BODY**

(30) Priority: 27.02.2013 JP 2013037398
(71) Applicant: Kyocera Corporation, Kyoto-shi, Kyoto 612-8501 (JP)
(72) Inventor: SHINO, Naoyuki, Kyoto-shi Kyoto 612-8501 (JP); NAKAMURA, Kiyotaka, Kyoto-shi Kyoto 612-8501 (JP); HIRANO, Yoshinori, Kyoto-shi Kyoto 612-8501 (JP)
(74) Representative: Viering, Jentschura & Partner mbB Patent- und Rechtsanwälte
(86) International application number: PCT/JP2014/054838
(87) International publication number: WO 2014/133068

(57) **Abstract**

There are provided a ceramic joined body having high joining strength and a flow passage body including the ceramic joined body and provided with a fluid passage. A ceramic joined body (10) includes a first silicon-carbide based sintered body (1); and a second silicon-carbide based sintered body (2), the first silicon-carbide based sintered body (1) and the second silicon-carbide based sintered body (2) being joined together by a joining layer (3), the joining layer (3) being coated by a first coating layer (4) containing metallic silicon as a main component, the first coating layer (4) being disposed over the first silicon-carbide based sintered body (1) and the second silicon-carbide based sintered body (2). Further, a flow passage body (15) includes the ceramic joined body (10) provided with a passage.

## Description

### Technical Field

The present invention relates to a ceramic joined body constructed such that silicon-carbide based sintered bodies are joined to each other; and a flow passage body constructed such that a passage is provided in this ceramic joined body.

### Background Art

Silicon-carbide based sintered bodies have high mechanical strength and have excellent characteristics in the heat resistance, the corrosion resistance, and the like. Thus, silicon-carbide based sintered bodies are used in a wide variety of fields. Then, in recent years, with increasing size in an apparatus or equipment provided with a member requiring such characteristics, size increase or length increase of the member or, alternatively, complexity increase in the shape of the member is required. Nevertheless, it is difficult that a molded article having a large size, a large length, a complicated shape, or the like is formed in an integrated manner. Further, even when such a molded article could be obtained in an integrated manner, since ceramics itself is a material in which firing is difficult, to obtain a sintered body without defects would be more difficult in the case of a larger size, a larger length, a more complicated shape, or the like. Further, in order to afford a large size, a large length, a complicated shape, or the like, large equipment for molding and firing and equipment capable of complicated machining have to be prepared. Thus, in addition to the difficulty in fabrication, a large equipment investment cost is also caused. Thus, the size increase or the length increase of the member, the complexity increase in the shape, or the like is achieved by a method of joining a plurality of sintered bodies.

As such an assembly, for example, Patent Literature 1 discloses a silicon carbide ceramic joined body constructed such that two or more silicon carbide ceramic members are joined together by using silicon, wherein a corner of at least one plane serving as a joining part of the silicon carbide ceramic members is chamfered.

### Citation List

### Patent Literature

Patent Literature 1: Japanese Unexamined Patent Publication JP-A 2001-261459

### Summary of Invention

### Technical Problem

In recent situations, in ceramic joined bodies capable of affording size increase or length increase of the member or complexity increase in the shape, yet higher joining strength is required.

Further, in a case where silicon-carbide based sintered bodies having tube shapes or the like are joined together so that length increase is achieved and then the obtained material is used as a passage for a fluid, in particular, when the temperature of the fluid or the operating environment is high or, alternatively, a hazardous fluid is used, such a situation must be avoided that the fluid leaks out from the joined part. Thus, in the flow passage body constructed from such a ceramic joined body, excellent airtightness is also required.

The invention has been devised in order to satisfy the above-mentioned requirements, and an object thereof is to provide: a ceramic joined body having high joining strength; and a flow passage body constructed such that a passage is provided in this ceramic joined body.

### Solution to Problem

A ceramic joined body of the invention comprises a first silicon-carbide based sintered body; and a second silicon-carbide based sintered body, the first silicon-carbide based sintered body and the second silicon-carbide based body being joined together by a joining layer, the joining layer being coated by a first coating layer containing metallic silicon as a main component, the first coating layer being disposed over the first silicon-carbide based sintered body and the second silicon-carbide based sintered body.

A flow passage body of the invention comprises the ceramic joined body mentioned above, the ceramic joined body being provided with a passage.

### Advantageous Effect of Invention

The ceramic joined body of the invention has high joining strength.

Further, the flow passage body of the invention has high joining strength. Further, in a case where the joined part is used as a passage, since more excellent airtightness is provided, even when the temperature of the fluid or the operating environment is high or, alternatively, a hazardous fluid is used, leakage from the joined portion seldom occurs and long-term use is achievable.

### Brief Description of Drawings

FIG. 1 shows an example of a ceramic joined body of an embodiment, wherein FIG. 1(a) is a perspective view and FIG. 1(b) is a partly sectional view of a joined portion;
FIG. 2 shows another example of a ceramic joined body of an embodiment, wherein FIG. 2(a) is a perspective view and FIG. 2(b) is a partly sectional view of a joined portion;
FIG. 3 shows yet another example of a ceramic joined body of an embodiment, wherein FIG. 3(a) is a perspective view and FIG. 3(b) is a partly sectional view of a joined portion;
FIG. 4 shows yet another example of a ceramic joined body of an embodiment, wherein FIG. 4(a) is a perspective view and FIG. 4(b) is a partly sectional view of a joined portion; and
FIG. 5 is a schematic diagram of a concentrating photovoltaic power system serving as an example of application of a flow passage body of an embodiment.

### Description of Embodiments

Examples of a ceramic joined body of an embodiment are described below.

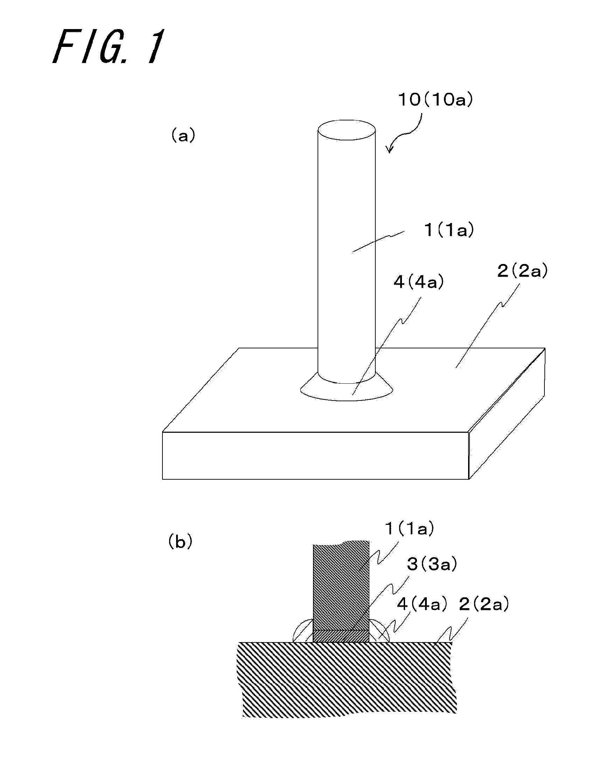

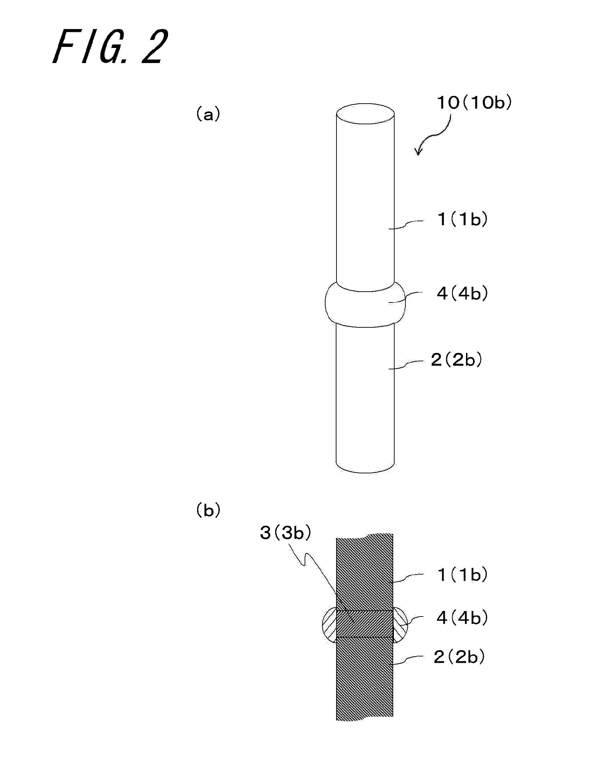

FIGS. 1 and 2 shows an example of a ceramic joined body of the embodiment. FIGS. 1(a) and 2(a) are a perspective view and FIGS. 1(b) and 2(b) are a partly sectional view of a joined portion. Here, in each figure, symbols each consisting of a numeric character and an alphabet are imparted for identification. However, the following description is given with imparting numeric characters alone, except in description of the ceramic joined body shown in FIG. 1 or 2.

The ceramic joined body 10 of each example shown in FIGS. 1 and 2 comprises a first silicon-carbide based sintered body 1 and a second silicon-carbide based sintered body 2, and the first silicon-carbide based sintered body 1 and the second silicon-carbide based sintered body 2 are joined together by a joining layer 3. The ceramic joined body 10a of the example shown in FIG. 1 shows an example that the shape of the first silicon-carbide based sintered body 1a is columnar and the shape of the second silicon-carbide based sintered body 2a is of plate shape. Further, the ceramic joined body 10b of the example shown in FIG. 2 shows an example that the shapes of the first silicon-carbide based sintered body 1b and the second silicon-carbide based sintered body 2b are both columnar. Here, in the ceramic joined body 10 of the embodiment, the shapes of the first silicon-carbide based sintered body 1 and the second silicon-carbide based sintered body 2 are not limited.

Then, in the ceramic joined body 10 of the embodiment, the joining layer 3 is coated by a first coating layer 4 containing metallic silicon as a main component and then the first coating layer 4 is disposed over the first silicon-carbide based sintered body and the second silicon-carbide based sintered body.

When such a configuration is satisfied, in the ceramic joined body 10 of the embodiment, the first silicon-carbide based sintered body 1 and the second silicon-carbide based sintered body 2 are firmly joined together so that a ceramic joined body having high joining strength is obtained. Here, the obtained high joining strength is caused by a fact that the metallic silicon serving as the main component of the first coating layer 4 has a satisfactory wettability relative to the first silicon-carbide based sintered body 1 and the second silicon-carbide based sintered body 2.

Here, the silicon-carbide based sintered body in the embodiment indicates such a material that silicon carbide occupies 70 mass% or higher among the entire components of 100 mass% constituting the silicon-carbide based sintered body. Further, the main component in the first coating layer 4 indicates a component occupying 80 mass% or higher among the entire components of 100 mass% constituting the first coating layer 4. Then, a component occupying 90 mass% or higher is preferable and a component occupying 95 mass% or higher is more preferable.

Further, the joining layer 3 provided between the first silicon-carbide based sintered body 1 and the second silicon-carbide based sintered body 2 is coated by the first coating layer 4 containing metallic silicon as the main component. Whether the first coating layer 4 spreads over the first silicon-carbide based sintered body 1 and the second silicon-carbide based sintered body 2 may be checked as follows.

First, in order to check the first silicon-carbide based sintered body 1, the second silicon-carbide based sintered body 2, and the joining layer 3, the ceramic joined body 10 is cut and then the cut surface is worked into a mirror surface (simply referred to as a mirror surface, hereinafter) by using an abrasive material such as diamond abrasive grains. Then, observation of the mirror surface is performed by using a scanning electron microscope (SEM) and, at the same time, by using an energy dispersive spectrometer (EDS) attached to the SEM, X-rays are projected onto the first coating layer 4 coating the joining layer 3 so that the presence of metallic silicon (Si) is checked.

Here, distinction between the first silicon-carbide based sintered body 1, the second silicon-carbide based sintered body 2 and the joining layer 3 may be performed such that observation of the mirror surface is performed by using a reflected electron image of the SEM with appropriately selecting a magnification factor (e.g., 150 or higher and 1000 or lower) that permits distinction of a joining interface, and thereby the distinction may be performed on the basis of the joining interfaces. Alternatively, surface analysis of individual elements in the mirror surface may be performed by using an electron probe microanalyzer (EPMA) and thereby the distinction may be performed on the basis of the elements, their contents, or the like constituting the first silicon-carbide based sintered body 1, the second silicon-carbide based sintered body 2, and the joining layer 3.

Further, as for the components constituting the to-be-joined body, first, from the value of 2θ (2θ indicates a diffraction angle) obtained by using an X-ray diffractometer (XRD), compound identification is performed by using a JCPDS card. Further, for example, quantitative analysis of metallic elements is performed by using an ICP (Inductively Coupled Plasma) emission spectrometer (ICP). Then, when a compound is identified as silicon carbide as a result of the measurement using the XRD and the content of silicon carbide (SiC) obtained as a value converted from a silicon (Si) content acquired by the measurement using the ICP is 70 mass% or higher, the to-be-joined body is a silicon-carbide based sintered body. Further, also for the other components of the to-be-joined body, the contents can be calculated by conversion from the obtained contents of the metallic elements corresponding to the identified compounds. Further, also for the components constituting the first coating layer 4, the contents can be acquired by using the ICP.

Further, in the joining layer 3, it is preferable that the main component is silicon carbide. When the main component of the joining layer 3 is composed of silicon carbide, a linear expansion coefficient thereof comes near those of the first silicon-carbide based sintered body 1 and the second silicon-carbide based sintered body 2. Thus, even when the joining layer 3 is repeatedly exposed to a high temperature, cracks are less prone to occur in the inside the joining layer 3.

Here, the main component in the joining layer 3 indicates a component exceeding 50 mass% among the entire components of 100 mass% constituting the joining layer 3. Further, it is preferable that the joining layer 3 contains metallic silicon in addition to the silicon carbide serving as the main component. When metallic silicon is contained in addition to the silicon carbide, metallic silicon is located in the surroundings of the silicon carbide playing the role of frame materials, and thereby connects the silicon carbide. Further, voids around the silicon carbide are reduced. Thus, high joining strength is obtained.

Then, as for the presence or absence of silicon carbide in the joining layer 3, from the value of the 2θ (2θ indicates a diffraction angle) obtained by using the XRD, compound identification may be performed by using the JCPDS card. Alternatively, check may be performed by using the SEM and the attached EDS. Specifically, observation of the mirror surface is performed by using the SEM and then X-rays are projected from the EDS attached to the SEM onto a crystal grain observed in an observation region. Then, it is sufficient that Si and C are checked. Here, as for the metallic silicon, check is achieved by projecting X-rays onto a portion other than a crystal grain.

Further, as another method, in surface analysis of the mirror surface performed by using the EPMA, when silicon also is confirmed in a region where carbon is confirmed, the presence of a crystal grain of silicon carbide may be concluded.

Next, in order to obtain the content of silicon carbide in the joining layer 3, the content of carbon may be measured by using an infrared absorption apparatus and then the content of carbon (c) may be converted into that of silicon carbide (SiC). Then, when the content of silicon carbide obtained here exceeds 50%, the silicon carbide is the main component of the joining layer 3.

Further, in the joining layer 3, when the main component is silicon carbide, it is preferable that metallic silicon and at least one metallic component of copper and manganese are contained. Metallic silicon connects the silicon carbide in the joining layer 3 and thereby increases the joining strength. Nevertheless, when a temperature change is repeated, for example, from a room temperature to a high temperature such as 1200°C and from the high temperature to the room temperature, cracks are caused by the volume change in the metallic silicon in some cases. In contrast, in a case where the metallic component described above is contained in addition to the metallic silicon, since such a metallic component has a melting point lower than the metallic silicon and hence is solidified later than the metallic silicon, even when cracks occurs owing to the volume change in the metallic silicon, the cracks are filled with the metallic component. Thus, the joining strength is maintained and hence excellent durability is achieved.

Further, it is preferable that the total content of copper and manganese among the entire components of 100 mass% constituting the joining layer 3 is 1 mass% or higher and 40 mass% or lower. When the total content of copper and manganese is 1 mass% or higher and 40 mass% or lower, a high value is obtained in the eutectic point between metallic silicon and copper or manganese. Thus, a high value is obtained in the joining strength of the joining layer 3 in a high-temperature environment. Here, the contents of copper and manganese in the joining layer 3 can be checked by using the ICP, the EDS, or the EPMA.

Further, it is preferable that the degree of dispersion of the particles of silicon carbide in the joining layer 3 is 0.3 or higher and 0.9 or lower. As such, when the degree of dispersion is 0.3 or higher and 0.9 or lower, the crystal grains of silicon carbide are present in a dispersed manner in the joining layer 3. Thus, even when the joining layer 3 is repeatedly exposed to a high temperature so that cracks occur in the metallic silicon, the development of cracks is blocked by the crystal grains of silicon carbide. Thus, high joining strength in a high-temperature environment is achieved.

Here, the degree of dispersion indicates a value obtained by dividing the standard deviation of the distances between centroids by the average of the distance between centroids and is a value acquired when an image obtained by observation of a cross section of the joining layer 3 is analyzed in accordance with a technique of distance-between-centroids method by using image analysis software "Azo-kun" (registered trademark, fabricated by Asahi Kasei Engineering Cooperation). Then, the cross section of the joining layer 3 indicates a mirror surface obtained by a method that: the ceramic joined body 10 is cut; then, diamond abrasive grains having an average grain diameter of 0.1 µm are dripped onto polishing cloth (e.g., polishing cloth (code No. 410 or 9450) fabricated by Engis Japan Corporation); and, after that, the joining layer 3 is polished. Further, the image indicates an image of an area of 1.1x10⁴ µm² (e.g., a horizontal length of 128 µm and a vertical length of 86 µm) obtained such that a portion where the particles of silicon carbide are observed on the average is selected from the cross section of the joining layer 3 and then observation is performed by using the SEM with a magnification factor of 1000. Here, as for the setting conditions at the time of analysis, the lightness of the particles may be set to be dark, the method of binarization may be set to be automatic, and the small geometrical figure removal area may be set to be 0 µm. In this state, measurement may be performed.

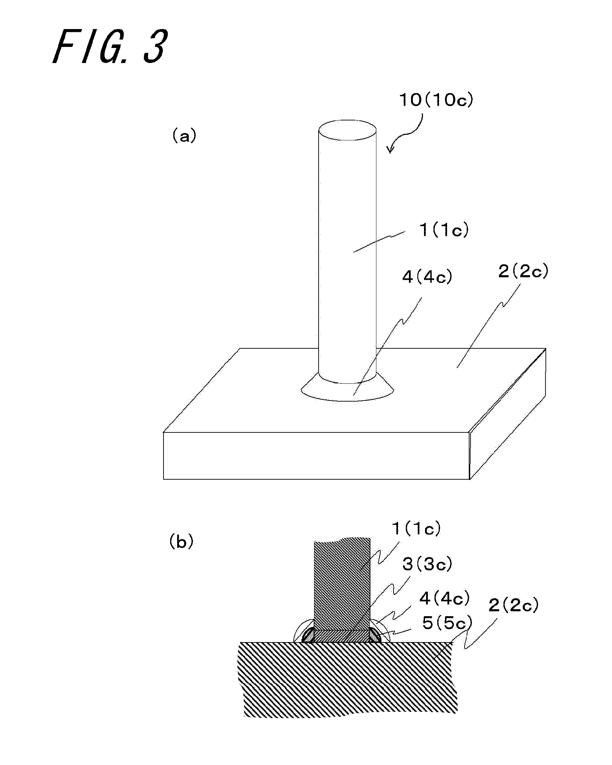

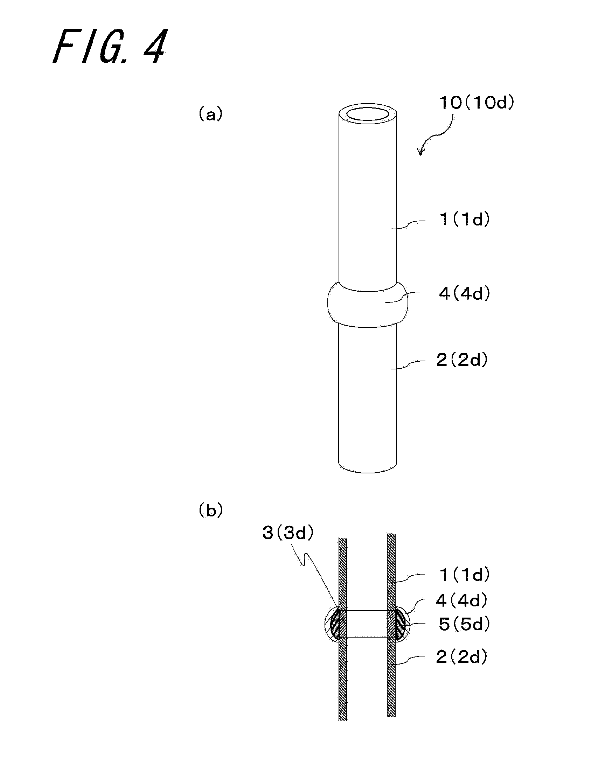

Next, FIGS. 3 and 4 show an example of a ceramic joined body of the embodiment. FIGS. 3(a) and 4(a) are a perspective view and FIGS. 3(b) and 4(b) are a partly sectional view of each joined portion.

The difference of the ceramic joined bodies 10c and 10d of the embodiment in the examples shown in FIGS. 3 and 4 from the ceramic joined bodies 10a and 10b of the embodiment in the examples shown in FIGS. 1 and 2 is that a second coating layer 5 containing silicon carbide as the main component is provided on the inner side of the first coating layer 4. Further, in contrast to the ceramic joined body 10b of the embodiment in the example shown in FIG. 2 where the shapes of the first silicon-carbide based sintered body 1b and the second silicon-carbide based sintered body 2b are both columnar, in the ceramic joined body 10d of the embodiment in the example shown in FIG. 4, the shapes of the sintered bodies are cylindrical. As such, when the second coating layer 5 containing silicon carbide as the main component is provided on the inner side of the first coating layer 4, the joining strength can be improve further.

Here, in a case where a configuration like the ceramic joined body 10d shown in FIG. 4 is employed, when the inside of the cylindrical shape is used as a passage through which a fluid flows, a flow passage body is obtained. In this flow passage body, by virtue of high joining strength and excellent airtightness, a high-temperature fluid is allowed to flow therethrough or a hazardous fluid is allowed to flow therethrough.

Here, the main component in the second coating layer 5 indicates a component exceeding 50 mass% among the entire components of 100 mass% constituting the second coating layer 5. Then, it is preferable that metallic silicon is contained in addition to the silicon carbide serving as the main component of the second coating layer 5. As such, when the second coating layer 5 contains metallic silicon, the first coating layer 4 containing metallic silicon as the main component is less prone to be peeled off. Thus, even when heat repeatedly acts on the ceramic joined body 10, high joining strength can be maintained.

Here, as for the calculation method for the presence or absence and the content of silicon carbide in the second coating layer 5, a method similar to that in the case of the joining layer 3 described above may be employed. Further, in the second coating layer 5, when the sources of silicon are silicon carbide and metallic silicon, as for the content of metallic silicon, the content of silicon may be measured by using the ICP and then silicon other than the silicon necessary in the calculation of the content of silicon carbide may be adopted as the content of metallic silicon.

Further, as for the distinction between the first coating layer 4 and the second coating layer 5, distinction may be performed by observing the mirror surface by using a reflected electron image of the SEM with appropriately selecting, for example, a magnification factor of 150 or higher and 1000 or lower. Here, distinction may be performed on the basis of the difference in the component elements obtained by surface analysis of individual elements in the mirror surface performed by using the electron probe microanalyzer (EPMA).

Further, in the ceramic joined body 10 of the embodiment, it is preferable that no pore is present in the joining layer 3. In a case where no pore is present in the joining layer 3, when a thermal shock acts on the ceramic joined body 10, cracks starting at the contour of a pore do not occur. Thus, reliability against a thermal shock can be improved. The presence or absence of pores in the joining layer 3 may be judge from a reflected electron image similarly to the case of distinction between the first silicon-carbide based sintered body 1, the second silicon-carbide based sintered body 2 and the joining layer 3. Further, it is preferable that no pore is present in the second coating layer 5 also. Here, a situation that the area occupation ratio of pores calculated by using image analysis software or the like is smaller than 0.2% is regarded as absence of pores.

Further, in each of the first silicon-carbide based sintered body 1 and the second silicon-carbide based sintered body 2 constituting the ceramic joined body 10 of the embodiment, it is preferable that the relative density is 95 vol% or higher and 99 vol% or lower.

Here, the relative density of each of the first silicon-carbide based sintered body 1 and the second silicon-carbide based sintered body 2 may be obtained by acquiring an apparent density of the silicon-carbide based sintered body according to JIS R 1634-1998 and then dividing the apparent density by the theoretical density of the silicon-carbide based sintered body.

Then, the first silicon-carbide based sintered body 1 and the second silicon-carbide based sintered body 2 may be of a combination of different relative densities in accordance with the environment of usage. For example, a sintered body having a high relative density may be employed in a portion where heat received from the outside is desired to be efficiently transferred to the fluid. Alternatively, a sintered body having a low relative density may be employed in a portion where the heat in the fluid is desired not to be radiated.

Further, in the first coating layer 4 constituting the ceramic joined body 10 of the embodiment, it is preferable that a surface thereof has metallic luster. In a case where the surface has metallic luster, when the first coating layer 4 is repeatedly exposed to a high temperature, degradation by a time dependent change can easily be checked visually. In particular, it is preferable that the surface reflectivity in the visible light range (a wavelength range from 380 nm to 780 nm) is 55% or higher.

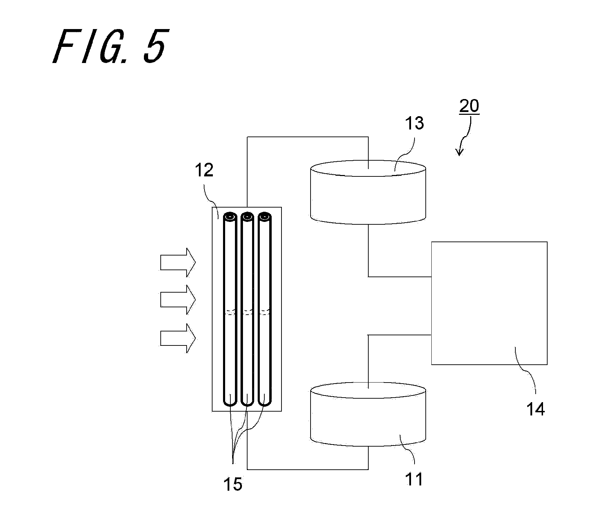

FIG. 5 is a schematic diagram of a concentrating photovoltaic power system serving as an example of application of the flow passage body of the embodiment.

In the concentrating photovoltaic power system 20 shown in FIG. 5, a medium is heated with the heat of concentrated sunlight and then electricity is generated by using the heat of the heated medium. Then, the concentrating photovoltaic power system 20 is constructed from a low-temperature medium storage tank 11, a heat collector 12, a high-temperature medium storage tank 13, and an energy conversion system 14. The flow leading to power generation is as follows: the medium is pumped from the low-temperature medium storage tank 11 to the heat collector 12; then, the concentrated sunlight is projected onto the heat collector 12 so that the medium is heated; then, the heated medium is stored into the high-temperature medium storage tank 13; and then, by using the heat energy of the heated medium pumped from the high-temperature medium storage tank 13, electricity is generated by the energy conversion system 14. Here, the medium from which the heat has been removed is sent to the low-temperature medium storage tank 11 so that this cycle is repeated. By virtue of this, electricity can be obtained without using fuel sources and without discharging greenhouse gases. Thus, this system is useful in the economic aspect and the environmental aspect.

Then, the heat collector 12 incorporates a plurality of flow passage bodies 15 each provided with a passage for the medium. The flow passage body 15 is an elongated member of several meters. The flow passage body 15 for receiving the heat of the concentrated sunlight must have resistance against a high temperature. Here, the flow passage body 15 has a similar configuration to the ceramic joined body 10d shown in FIG. 4. Thus, the flow passage body 15 is constructed from the ceramic joined body 10d of the embodiment and thereby has high joining strength and excellent airtightness. Accordingly, the concentrating photovoltaic power system 20 has high reliability such that electricity can stably be generated for a long term.

Here, employable shapes of the flow passage body 15 of the embodiment are not restricted to the above-mentioned ones. For example, the first silicon-carbide based sintered body 1 having a cylindrical shape and the second silicon-carbide based sintered body 2 having a flat plate shape provided with a passage in the inside may be joined together and then the inside of the cylindrical shape and the inside of the flat plate shape may be used as a passage. Alternatively, the first silicon-carbide based sintered body 1 having a columnar shape and the second silicon-carbide based sintered body 2 having a flat plate shape provided with a passage in the inside may be joined together and then the inside of the flat plate shape alone may be used as a passage and the first silicon-carbide based sintered body 1 having a columnar shape may support the second silicon-carbide based sintered body 2 having a flat plate shape. As such, depending on the combination of the to-be-joined bodies, the flow passage body 15 may have a shape of diverse kind. Then, when the first silicon-carbide based sintered body 1 having a cylindrical shape and the second silicon-carbide based sintered body 2 having a flat plate shape provided with a passage in the inside are joined and stacked, the flow passage body 15 of the embodiment can be applied also to the heat exchanger.

Next, an example of fabrication method for the ceramic joined body of the embodiment is described below.

First, the first silicon-carbide based sintered body 1 and the second silicon-carbide based sintered body 2 are prepared. Then, paste (e.g., silicon carbide powder, metallic silicon powder, carbon powder, and ethyl cellulose or an acryl based binder are contained in an organic solvent) for constructing the joining layer 3 is applied onto the joining surface of one of the first silicon-carbide based sintered body 1 and the second silicon-carbide based sintered body 2. After that, the joining surfaces are joined together and then pressurized in a direction perpendicular to the joining surfaces. Here, in order that the main component in the joining layer 3 may become silicon carbide, it is sufficient that the mass of silicon carbide powder is set to be 50 mass% or higher among the mass total 100 mass% of silicon carbide powder, metallic silicon powder, and carbon powder. Further, as shown in FIG. 1, the pressurization for joining to the plate shape may be performed by using the self-weight of the member to be joined to the flat-plate shaped member.

Here, in order to obtain the ceramic joined body 10 in which the joining layer 3 contains at least one of copper and manganese, it is sufficient that at least one of copper powder and manganese powder is contained in the paste for constructing the joining layer 3.

Further, in order to obtain the ceramic joined body 10 in which the degree of dispersion of the particles of silicon carbide in the joining layer 3 is 0.3 or higher and 0.9 or lower, it is sufficient that: an agitation defoaming device is employed; then, for example, an organic solvent, silicon carbide powder, ethyl cellulose or an acryl based binder, and carbon powder are put into a storage container in the agitation defoaming device; then, the storage container is revolved at a revolution rate of 2000 rpm for 2 to 12 minutes; and after that, reverse revolution is performed at a revolution rate of 2200 rpm for 30 seconds.

Then, in a pressurized state, paste (e.g., metallic silicon powder and ethyl cellulose or an acryl based binder are contained in an organic solvent) for constructing the first coating layer 4 is applied such as to coat the already-applied paste for constructing the joining layer 3 and spread over the first silicon-carbide based sintered body 1 and the second silicon-carbide based sintered body 2. Then, the paste is dried at a temperature of 80°C or higher and 200°C or lower for a holding time of 8 hours or longer and 14 hours or shorter.

After that, heat treatment is performed in an inert-gas atmosphere such as argon at a pressure of 1 atmosphere at a holding temperature of 1400°C or higher and 1500°C or lower for a holding time of 30 minutes or longer and 90 minutes or shorter. As a result, the ceramic joined body 10 of the embodiment can be obtained. Here, it is preferable that the temperature rise rate from 1100°C to the holding temperature is set to be, for example, 2°C/minute or higher and 2.5°C/minute or lower. Further, in order to obtain the ceramic joined body 10 in which the surface of the first coating layer 4 has metallic luster, it is sufficient that the heat treatment is performed in a vacuum atmosphere.

Further, in order to provide the second coating layer 5 containing silicon carbide as the main component on the inner side of the first coating layer 4, it is sufficient that paste (e.g., silicon carbide powder, metallic silicon powder, carbon powder, and ethyl cellulose or an acryl based binder are contained in an organic solvent) for constructing the second coating layer 5 is applied onto the outer periphery of the paste for constructing the joining layer 3 and, after that, paste for constructing the first coating layer 4 is applied.

Here, in order that the main component in the second coating layer 5 may become silicon carbide, it is sufficient that the mass of silicon carbide powder is set to be 50 mass% or higher among the mass total 100 mass% of silicon carbide powder, metallic silicon powder, and carbon powder. Further, in a case where the paste for constructing the joining layer 3 and the paste for constructing the second coating layer 5 are composed of the same components, for example, in the case of the ceramic joined body 10c as shown in FIG. 3, a portion inside the extension line of the outer peripheral surface of the first silicon-carbide based sintered body 1 may be regarded as the joining layer 3 and the other portion may be regarded as the second coating layer 5.

Further, in order to obtain the ceramic joined body 10 in which no pore is present in the joining layer 3, it is sufficient that: in an inert-gas atmosphere such as argon, the temperature is raised to the holding temperature at a pressure lower than 1 atmosphere; then, when the holding temperature has been reached, the pressure is set to be 1 atmosphere; and then heat treatment is performed at a holding temperature of 1400°C or higher and 1500°C or lower for a holding time of 30 minutes or longer and 90 minutes or shorter.

Here, in another method of obtaining the ceramic joined body 10 of the embodiment, paste in which silicon carbide powder, carbon powder, and ethyl cellulose or an acryl based binder are contained in an organic solvent and which is for constructing the joining layer 3 may be employed. Then, metallic silicon contained in the paste for constructing the first coating layer 4 and having been melted by heat treatment may be caused to flow thereinto. Further, at that time, when at least one of copper powder and manganese powder is caused to be contained in the paste for constructing the first coating layer 4, at least one of copper and manganese can be caused to flow into the joining layer 3 together with the metallic silicon having been melted by heat treatment.

Examples of the invention are described below in detail. However, the invention is not limited to these examples.

### Example 1

First, a first silicon-carbide based sintered body and a second silicon-carbide based sintered body each having a prismatic shape were prepared. Here, the ceramic joined body to be fabricated in Example 1 has test-piece dimensions according to JIS R 1624-2010 and the joining layer thereof is located in the center in the longitudinal direction. Then, paste (silicon carbide powder, metallic silicon powder, carbon powder, and ethyl cellulose are contained in terpineol serving as an organic solvent) for constructing the joining layer was applied onto the end face serving as the joining surface of the first silicon-carbide based sintered body such that a joining layer having a thickness of 40 µm may be obtained. After that, the second silicon-carbide based sintered body was placed thereon.

Here, in Sample No. 1, the mass percentage of silicon carbide powder, metallic silicon powder and carbon powder was set to be 45:54:1. In Sample Nos. 2 to 5, the mass percentage of silicon carbide powder, metallic silicon powder and carbon powder was set to be 54:45:1. Further, relative to the total of 100 mass parts of the powder, terpineol was set to be 30 mass parts and ethyl cellulose was set to be 12 mass parts. Similar composition was employed also in the paste for constructing the first coating layer and in the paste for constructing the second coating layer. Further, the pressurization in a direction perpendicular to the joining surface was performed by using the self-weight of the second silicon-carbide based sintered body.

Then, in Sample Nos. 1 and 2, paste (silicon powder and ethyl cellulose were contained in an organic solvent) for constructing the first coating layer was applied such that the first coating layer containing metallic silicon as the main component may coat the surface of the paste for constructing the joining layer and spread over the first silicon-carbide based sintered body and the second silicon-carbide based sintered body.

Next, in Sample Nos. 3 and 4, paste (silicon carbide powder, carbon powder, and ethyl cellulose are contained in an organic solvent) for constructing the second coating layer was applied such as to coat the paste for constructing the joining layer. After that, paste for constructing the first coating layer was applied such as to coat the surface of the paste for constructing the second coating layer. Here, in Sample No. 3, the mass percentage of silicon carbide powder, metallic silicon powder and carbon powder was set to be 45:54:1. In Sample No. 4, the mass percentage of silicon carbide powder, metallic silicon powder and carbon powder was set to be 54:45:1.

Next, in Sample No. 5, the paste for constructing the first coating layer and the paste for constructing the second coating layer were both not applied.

Then, Sample was held and dried at 140°C for 11 hours. After that, heat treatment was performed in an argon atmosphere at a pressure of 1 atmosphere at a holding temperature of 1430°C for a holding time of 60 minutes so that ceramic joined bodies of Sample Nos. 1 to 5 in which the first silicon-carbide based sintered body and the second silicon-carbide based sintered body were joined together were obtained. Here, in each sample, the temperature rise rate from 1100°C to the holding temperature was set to be 2.2°C/minute.

Then, the four-point flexural strength was measured according to JIS R 1624-2010.

**[Table 1]**

| Sample No. | Main component of Joining layer | First coating layer | Second coating layer | Main component of Second coating layer | Joining strength (MPa) |
|---|---|---|---|---|---|
| 1 | Metallic silicon | Present | Absent | Absent | 300 |
| 2 | Silicon carbide | Present | Absent | Absent | 311 |
| 3 | Silicon carbide | Present | Present | Metallic silicon | 354 |
| 4 | Silicon carbide | Present | Present | Silicon carbide | 360 |
| 5 | Silicon carbide | Absent | Absent | Absent | 260 |

As seen from the results shown in Table 1, in Sample Nos. 1 to 4, the first silicon-carbide based sintered body and the second silicon-carbide based sintered body were joined together by the joining layer, then the joining layer was coated by the first coating layer containing metallic silicon as the main component, and then the first coating layer was disposed over the first silicon-carbide based sintered body and the second silicon-carbide based sintered body. Thus, higher joining strength was achieved than in Sample No. 5.

Then, from comparison between Sample Nos. 1 and 2, it has been found that a configuration that the main component of the joining layer is silicon carbide is preferable. Further, from comparison between Sample Nos. 1 to 4, it has been found that: a configuration that the second coating layer is provided on the inner side of the first coating layer is preferable; and, further, a configuration that the main component of the second coating layer is silicon carbide is preferable.

### Example 2

For each sample, fabricated were: a sample which has test-piece dimensions according to JIS R 1624-2010 and in which the joining layer is located in the center in the longitudinal direction; and a sample according to JIS Z 2331-2006.

First, as paste for constructing the joining layer, paste composed of silicon carbide powder and of 30 mass parts of terpineol and 12 mass parts of ethyl cellulose relative to 100 mass parts of silicon carbide powder was prepared.

Further, as paste for constructing the first coating layer, paste for constructing the joining layer was prepared in which the mass percentage of metallic silicon powder and powder of the component shown in Table 2 was 90:10; and terpineol was in 30 mass parts and ethyl cellulose was in 12 mass parts relative to the total of 100 mass parts of the powder. Here, in Sample No. 6, the paste for constructing the first coating layer not containing a metallic component employed in Example 1 was employed.

Then, paste for constructing the first coating layer was applied such that the first coating layer containing metallic silicon as the main component may coat the surface of the paste for constructing the joining layer and spread over the first silicon-carbide based sintered body and the second silicon-carbide based sintered body. Then, paste for constructing the joining layer was applied such that the thickness of the joining layer may become 0.15 mm. Then, each sample was fabricated by a similar method to Example 1 except that the atmosphere in the heat treatment was changed to a vacuum atmosphere. Here, the paste for constructing the joining layer did not contain a metallic component such as copper and manganese. However, in Sample Nos. 7 to 9, a metallic component has flowed thereinto together with the metallic silicon melted at the time of heat treatment. Thus, the metallic component was contained in the joining layer.

Then, each sample was placed in a thermal treatment apparatus. Then, the temperature was raised and then the sample was held at 1250°C for 10 hours in an atmosphere having an oxygen partial pressure of 10⁻⁹ MPa and containing water vapor. After that, the temperature was lowered to an ordinary temperature. Then, with adopting a definition that the process of temperature rise, holding, and temperature lowering is referred to as one cycle, a cycle test in which 50 cycles were repeated was performed.

Then, according to JIS R 1624-2010, the four-point flexural strength was measured at an ordinary temperature for the sample prior to the cycle test and for the sample posterior to the cycle test. The obtained values are shown in Table 2 as joining strength σ₀ and σ₁, respectively. Further, a decreasing ratio Δσ (%: (σ₀-σ₁)/σ₀×100) of the joining strength was calculated and is shown in Table 2.

Further, according to a vacuum spraying method (a spray method) set forth in JIS Z 2331-2006, the leak rate of helium gas in the joining layer was measured at an ordinary temperature for the sample having undergone the cycle test. In Table 2, "1" indicates a sample whose leak rate was 10⁻¹⁰ Pa·m³/second or higher and 10⁻⁹ Pa·m³/second or lower. Further, "2" indicates a sample whose leak rate was lower than 10⁻¹⁰ Pa·m³/second.

Further, the metallic component contained in the joining layer and the first coating layer was checked by using the EDS. The results are shown in Table 2.

**[Table 2]**

| Sample No. | Joining layer component | First coating layer component | Joining strength | | Decreasing ratio of joining strength Δσ (%) | Leak |
|---|---|---|---|---|---|---|
| | | | σ₀ (MPa) | σ₁ (MPa) | | |
| 6 | - | - | 310 | 280 | 9.7 | 1 |
| 7 | Copper | Copper | 312 | 294 | 5.8 | 2 |
| 8 | Manganese | Manganese | 310 | 291 | 6.1 | 2 |
| 9 | Copper and manganese | Copper and manganese | 311 | 292 | 6.1 | 2 |

As shown in Table 2, in Sample Nos. 7 to 9, the joining layer contained metallic silicon and at least one metallic component of copper and manganese. Thus, even after the cycle test, the decreasing ratio of the joining strength was small and the leak rate was also low. Accordingly, it has been found that excellent durability is achieved.

### Example 3

First, silicon carbide powder and 30 mass parts of terpineol plus 12 mass parts of ethyl cellulose relative to 100 mass parts of silicon carbide powder were prepared. Then, these were put into the storage container in the agitation defoaming device and then the storage container was revolved at a revolution rate of 2000 rpm for a time shown in Table 3. After that, reverse revolution was performed at a revolution rate of 2200 rpm for 30 seconds so that paste for constructing the joining layer was obtained.

Further, the paste for constructing the first coating layer employed in Example 2 was prepared. Then, each sample was fabricated by a similar method to Example 2.

Then, a cycle test was performed by a similar method to Example 2. Then, according to JIS R 1624-2010, the four-point flexural strength was measured at an ordinary temperature for the sample prior to the cycle test and for the sample posterior to the cycle test. The obtained values are shown in Table 3 as joining strength σ₀ and σ₁, respectively. Further, the decreasing ratio Δ₆ of the joining strength was calculated and is shown in Table 3.

Further, according to a vacuum spraying method (a spray method) set forth in JIS Z 2331-2006, the leak rate of helium gas in the joining layer was measured at an ordinary temperature for the sample having undergone the cycle test. In Table 2, "1" indicates a sample whose leak rate was 10⁻¹⁰ Pa·m³/second or higher and 10⁻⁹ Pa·m³/second or lower. Further, "2" indicates a sample whose leak rate was lower than 10⁻¹⁰ Pa·m³/second.

Further, each sample was cut such that the joining layer may be checked. Then, diamond abrasive grains having an average grain diameter of 0.1 µm were dripped onto polishing cloth (polishing cloth (code No. 410) fabricated by Engis Japan Corporation). After that, observation was performed by using the SEM with a magnification factor of 1000. Then, a portion where the particles of silicon carbide were observed on the average in the joining layer was selected. Then, by using an image of a region having an area of 1.1×10⁴ µm² (a horizontal length of 128 µm and a vertical length of 86 µm), the degree of dispersion of the particles of silicon carbide in the joining layer was acquired in accordance with a technique of distance-between-centroids method by employing image analysis software "Azo-kun" (registered trademark, fabricated by Asahi Kasei Engineering Cooperation). The acquired values are shown in Table 3. Here, as for the setting conditions at the time of analysis, the lightness of the particles was set to be dark, the method of binarization was set to be automatic, and the small geometrical figure removal area was set to be 0 µm. In this state, the measurement was performed.

**[Table 3]**

| Sample No. | Revolution time (minute) | Degree of dispersion | Joining strength | | Decreasing ratio of joining strength Δσ (%) | Leak |
|---|---|---|---|---|---|---|
| | | | σ₀ (MPa) | σ₁ (MPa) | | |
| 10 | 1 | 0.2 | 308 | 279 | 9.4 | 1 |
| 11 | 2 | 0.3 | 312 | 294 | 5.8 | 2 |
| 12 | 7 | 0.6 | 310 | 291 | 6.1 | 2 |
| 13 | 12 | 0.9 | 311 | 292 | 6.1 | 2 |
| 14 | 14 | 1.0 | 308 | 280 | 9.1 | 1 |

As shown in Table 3, in Sample Nos. 11 to 13, the degree of dispersion of the particles of silicon carbide in the joining layer was 0.3 or higher and 0.9 or lower. Thus, even after the cycle test, the decreasing ratio of the joining strength was small and the leak rate was also low. Accordingly, it has been found that excellent durability is achieved.

From these results, it has been found that the ceramic joined body of the embodiment has high joining strength and hence size increase or length increase of the member or complexity increase in the shape can preferably be achieved. Further, it has been found that when the ceramic joined body is formed such as to have a passage, since high joining strength and excellent airtightness are provided, the ceramic joined body is preferable as a member through which a high-temperature fluid is caused to flow or a hazardous fluid is caused to flow.

### Reference Signs List

- 1:: First silicon-carbide based sintered body
- 2:: Second silicon-carbide based sintered body
- 3:: Joining layer
- 4:: First coating layer
- 5:: Second coating layer
- 10:: Ceramic joined body
- 15:: Flow passage body
- 20:: Concentrating photovoltaic power system

## Claims

1. A ceramic joined body, comprising:
a first silicon-carbide based sintered body; and
a second silicon-carbide based sintered body, the first silicon-carbide based sintered body and the second silicon-carbide based sintered body being joined together by a joining layer, the joining layer being coated by a first coating layer containing metallic silicon as a main component, the first coating layer being disposed over the first silicon-carbide based sintered body and the second silicon-carbide based sintered body.

2. The ceramic joined body according to claim 1, wherein a main component of the joining layer is silicon carbide.

3. The ceramic joined body according to claim 2, wherein the joining layer contains metallic silicon and at least one of copper and manganese.

4. The ceramic joined body according to claim 2 or 3, wherein a degree of dispersion of particles of the silicon carbide in the joining layer is 0.3 or higher and 0.9 or lower.

5. The ceramic joined body according to any one of claims 1 to 4, wherein a second coating layer containing silicon carbide as a main component is provided on an inner side of the first coating layer.

6. The ceramic joined body according to any one of claims 1 to 5, wherein no pore is present in the joining layer.

7. A flow passage body, comprising:
the ceramic joined body according to any one of claims 1 to 6, the ceramic joined body being provided with a passage.
